(19) Europäisches Patentamt
European Patent Office
Office européen des brevets

(11) **EP 4 664 493 A1**

(12) **EUROPEAN PATENT APPLICATION**
published in accordance with Art. 153(4) EPC

(43) Date of publication:
**17.12.2025 Bulletin 2025/51**

(21) Application number: **23921322.6**

(22) Date of filing: **29.11.2023**

(51) International Patent Classification (IPC):
*H01B 1/08* (2006.01)      *C01G 25/00* (2006.01)
*H01B 1/06* (2006.01)      *H01G 11/56* (2013.01)
*H01M 4/13* (2010.01)      *H01M 4/62* (2006.01)
*H01M 4/66* (2006.01)      *H01M 10/052* (2010.01)
*H01M 10/0562* (2010.01)      *H01M 10/0568* (2010.01)

(52) Cooperative Patent Classification (CPC):
**C01G 25/00; H01B 1/06; H01B 1/08; H01G 11/56;
H01M 4/13; H01M 4/62; H01M 4/66; H01M 10/052;
H01M 10/0562; H01M 10/0568;** Y02E 60/10

(86) International application number:
**PCT/JP2023/042638**

(87) International publication number:
**WO 2024/166502 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.02.2023 JP 2023018920**

(71) Applicant: Niterra Co., Ltd.
**Nagoya-shi, Aichi 461-0005 (JP)**

(72) Inventors:
• **TAKEUCHI, Yuki**
  **Nagoya-shi, Aichi 461-0005 (JP)**
• **SAKAGUCHI, Masaki**
  **Nagoya-shi, Aichi 461-0005 (JP)**

(74) Representative: **Grünecker Patent- und
Rechtsanwälte
PartG mbB
Leopoldstraße 4
80802 München (DE)**

(54) **ION CONDUCTOR, COMPOSITE, SHEET, ELECTRODE, SEPARATOR, AND POWER STORAGE DEVICE**

(57)      Provided are an ion conductor whose lithium ion conducting property can be controlled, a composite, a sheet, an electrode, a separator, and a power storage device. The ion conductor (10) contains a solid electrolyte (19) which has a garnet-type crystal structure containing Li, La, Zr, and O, wherein lithium carbonate (19a) is partially present on a surface of the solid electrolyte. The composite (19d) contains the ion conductor and an ionic liquid containing a lithium salt dissolved therein, wherein the ionic liquid contains a fluorine-based anion, and, in a film (19c) which covers the surface of the solid electrolyte, the relative concentration ratio of a fluoride to carbonate ions is 0.1 or greater. The power storage device (11) includes the ion conductor.

*FIG. 1*

**Description**

TECHNICAL FIELD

The present invention relates to an ion conductor containing a solid electrolyte, to a composite, to a sheet, to an electrode, to a separator, and to a power storage device.

BACKGROUND ART

A solid electrolyte which has a garnet-type crystal structure containing Li, La, Zr, and O reacts with moisture and carbon dioxide in the atmosphere, thereby producing lithium carbonate on its surface (Patent Literature 1).

CITATION LIST

PATENT LITERATURE

Patent Literature 1: JP6735425B

SUMMARY OF INVENTION

TECHNICAL PROBLEM

Since the lithium ion conductivity of lithium carbonate is markedly lower than the lithium ion conductivity of solid electrolyte having a garnet-type crystal structure, lithium carbonate on the surface of the solid electrolyte constitutes a resistive phase. Therefore, the surface condition of the solid electrolyte must be controlled in order to control the lithium ion conducting property of an ion conductor containing the solid electrolyte.
The present invention has been conceived in order to meet such a demand, and an object of the invention is to provide an ion conductor whose lithium ion conducting property can be controlled, a composite, a sheet, and a power storage device.

SOLUTION TO PROBLEM

A first mode which achieves the above object is an ion conductor containing a solid electrolyte which has a garnet-type crystal structure containing Li, La, Zr, and O, wherein lithium carbonate is partially present on a surface of the solid electrolyte.
A second mode is the ion conductor of the first mode, wherein, on the surface of the solid electrolyte, the relative concentration ratio of zirconium to carbonate ions is 0.01 or greater.
A third mode is a composite containing the ion conductor of the first mode or the second mode, and an ionic liquid containing a lithium salt dissolved therein, wherein the ionic liquid contains a fluorine-based anion, the surface of the solid electrolyte is covered with a film, and the relative concentration ratio of a fluoride to carbonate ions in the film is 0.1 or greater.
A fourth mode is the composite of the third mode, wherein the solid electrolyte further contains Mg and Sr and does not contain F.
A fifth mode is a sheet containing the ion conductor of the first mode or the second mode, or containing the composite of the third mode or the fourth mode.
A sixth mode is an electrode containing the ion conductor of the first mode or the second mode or the composite of the third mode or the fourth mode. Alternatively, the electrode is in contact with a protective layer containing the ion conductor of the first mode or the second mode or a protective layer containing the composite of the third mode or the fourth mode.
A seventh mode is a separator containing the ion conductor of the first mode or the second mode or the composite of the third mode or the fourth mode. Alternatively, the separator is in contact with a protective layer containing the ion conductor of the first mode or the second mode or a protective layer containing the composite of the third mode or the fourth mode.
An eighth mode is a power storage device comprising the electrode of the sixth mode or the separator of the seventh mode.

ADVANTAGEOUS EFFECTS OF INVENTION

In the ion conductor, the composite, the sheet, the electrode, the separator, and the power storage device of the present invention, since lithium carbonate which constitutes a resistive phase is present only partially on the surface of the solid electrolyte which has a garnet-type crystal structure containing Li, La, Zr, and O, lithium ion conducting property can be controlled.

BRIEF DESCRIPTION OF DRAWINGS

[FIG. 1] FIG. 1 is a cross-sectional view of a power storage device including an ion conductor according to a first embodiment.
[FIG. 2] FIG. 2 is a view schematically showing a garnet-type crystal structure.
[FIG. 3] Section (a) of FIG. 3 is a cross-sectional view of a solid electrolyte, and section (b) of FIG. 3 is a cross-sectional view of the solid electrolyte in contact with an ionic liquid.
[FIG. 4] FIG. 4 is a cross-sectional view of a power storage device according to a second embodiment.
[FIG. 5] FIG. 5 is a cross-sectional view of a power storage device according to a third embodiment.
[FIG. 6] Section (a) of FIG. 6 is a cross-sectional view of an insulator according to a fourth embodiment, section (b) of FIG. 6 is a cross-sectional view of an electrode according to a fifth embodiment, and section (c) of FIG. 6 is a cross-sectional view of an electrode according to a sixth embodiment.

DESCRIPTION OF EMBODIMENTS

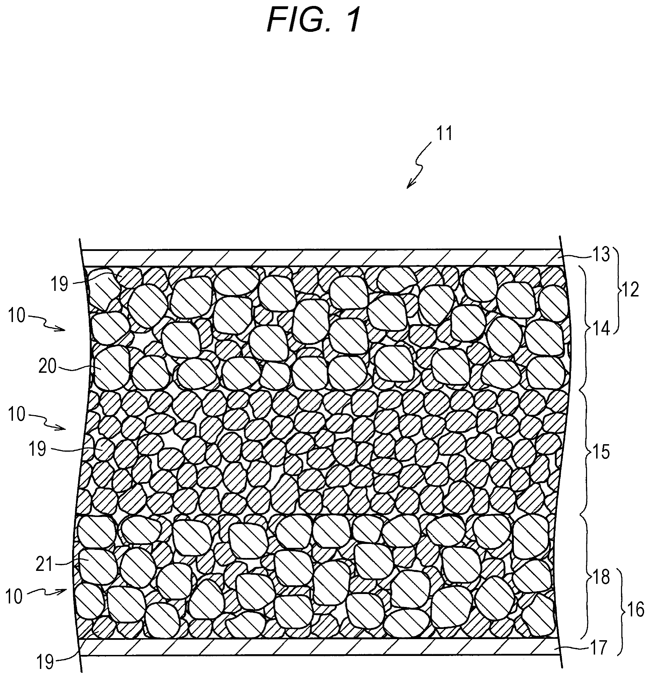

Hereinafter, a preferred embodiment of the present invention will be described with reference to attached drawings. FIG. 1 is a schematic cross-sectional view of a power storage device 11 including an ion conductor 10 according to a first embodiment. The power storage device 11 according to the present embodiment is a lithium ion solid battery in which power generating elements are formed of a solid material. The expression "a power generating element is formed of a solid material" refers to a case in which a main body of the power generating element is formed of a solid material, and also encompasses an embodiment in which the main body has been impregnated with liquid.

The power storage device 11 includes, from top to bottom, a positive electrode layer 12, a separator 15, and a negative electrode layer 16. The positive electrode layer 12, the separator 15, and the negative electrode layer 16 are built in a case (not illustrated).

The positive electrode layer 12 includes an active material layer 14 and a current-collecting layer 13 stacked thereon. The current-collecting layer 13 is a member having electrical conductivity. Examples of the material of the current-collecting layer 13 include metals selected from among Ni, Ti, Fe, and Al; alloys each containing two or more of such metals; stainless steel; and carbon material.

The active material layer 14 contains an ion conductor 10 and an active material 20. The ion conductor 10 contains a solid electrolyte 19. For lowering the electrical resistance of the active material layer 14, the active material layer 14 may contain a conducting aid. Examples of the conducting aid include carbon black, acetylene black, Ketjen black, carbon fiber, Ni, Pt, and Ag.

Examples of the active material 20 include a metal oxide in which the metal includes a transition metal, a sulfur-containing active material, and an organic active material. Examples of the metal oxide in which the metal includes a transition metal include a metal oxide in which the metal includes Li and at least one species selected from among Mn, Co, Ni, Fe, Cr, and V. Specific examples of the metal oxide in which the metal includes a transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_4$, $LiNi_{1/3}Mn_{1/3}Co_{1/3}O_4$, and $LiFePO_4$.

In order to suppress reaction between the active material 20 and the solid electrolyte 19, a coating layer may be provided on the surface of the active material 20. Examples of the coating layer include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoquinodimethane; and phenazine oxide.

The separator 15 isolates the positive electrode layer 12 and the negative electrode layer 16 from each other, thereby electrically insulating them from each other. The separator 15 is composed of the ion conductor 10. The ion conductor 10 contains the solid electrolyte 19 and an electrolytic solution. The ion conductor 10 may further contains a binder.

The negative electrode layer 16 includes an active material layer 18 and a current-collecting layer 17 stacked thereon. The current-collecting layer 17 is a member having electrical conductivity. Examples of the material of the current-collecting layer 17 include metals selected from among Ni, Ti, Fe, Cu, and Si; alloys each containing two or more of such metals; stainless steel; and carbon material.

The active material layer 18 contains the ion conductor 10 and an active material 21. In order to lower the electrical resistance of the active material layer 18, the active material layer 18 may further contain a conducting aid. Examples of the conducting aid include carbon black, acetylene black, Ketjen black, carbon fiber, Ni, Pt, and Ag. Examples of the active material 21 include Li, Li-Al alloy, $Li_4Ti_5O_{12}$, graphite, In, Si, Si-Li alloy, and SiO. Similar to the separator 15, the active material layers 14, 18 may further contain a binder.

The power storage device 11 is fabricated through, for example, the following procedure. An ionic liquid (electrolytic solution) in which a lithium salt has been dissolved is mixed with the solid electrolyte 19. To the resultant mixture, a solution of a binder dissolved in a solvent is added with mixing, to thereby form a slurry. The slurry is formed into a sheet-like shape and then dried, to thereby yield a green sheet (electrolyte sheet) for the separator 15.

The ionic liquid (electrolytic solution) in which a lithium salt has been dissolved is mixed with the solid electrolyte 19. To the resultant mixture, the active material 20 and a solution of the binder dissolved in a solvent are sequentially added with mixing, to thereby form a slurry. The slurry is applied onto the current-collecting layer 13 and then dried to form a green sheet (positive electrode sheet) for the positive electrode layer 12.

The ionic liquid (electrolytic solution) in which a lithium salt has been dissolved is mixed with the solid electrolyte 19. To the resultant mixture, the active material 21 and a solution of the binder dissolved in a solvent are sequentially added with mixing, to thereby form a slurry. The slurry is applied onto the current-collecting layer 17 and then dried to form a green sheet (negative electrode sheet) for the negative electrode layer 16.

The electrolyte sheet, the positive electrode sheet, and the negative electrode sheet are cut into predetermined shapes. The cut sheets (the positive electrode sheet, the electrolyte sheet, and the negative electrode sheet which have been cut) are stacked in this order, and the resultant stacked body is pressed to integrate the sheets. To each of the current-collecting layers 13 and 17, a terminal (not illustrated) is connected, and the stacked body is enclosed in a case (not illustrated). Thus, a power storage device 11 including the positive electrode layer 12, the separator 15, and the negative electrode layer 16 is obtained. As described above, the sheet containing the solid electrolyte 19 can become any of the electrolyte sheet, the positive electrode sheet, and the negative electrode sheet depending on the material added thereto.

The solid electrolyte 19 is a complex oxide having a garnet-type crystal structure containing Li, La, and Zr. The garnet-type crustal structure of this type is represented by a general formula $C_3A_2B_3O_{12}$.

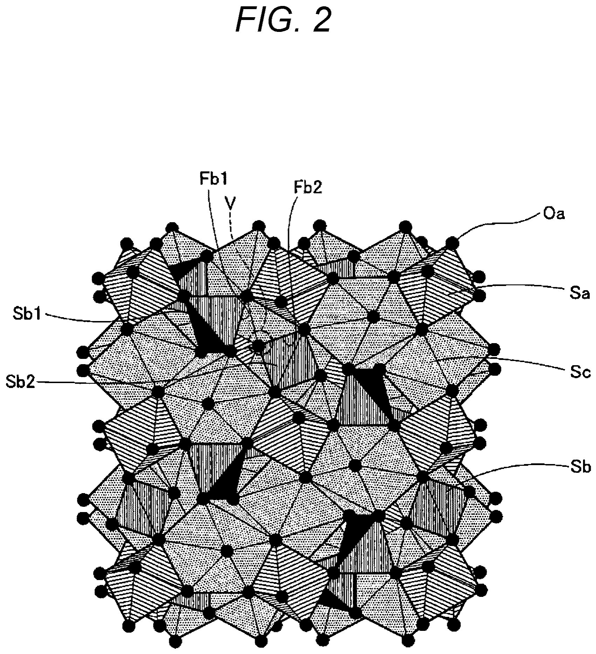

FIG. 2 is a view schematically showing a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The solid electrolyte 19 generally has a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb 1 and Fb2, wherein Fb 1 forms the B site (Sb1), and Fb2 forms the B site (Sb2). In one possible case, in $Li_7La_3Zr_2O_{12}$ having a garnet-type crystal structure, La is present in the C sites (Sc); Zr in the A sites (Sa), and Li in the B sites (Sb) and the vacancy (V).

The garnet-type crystal structure exhibits an XRD pattern similar to that of an X-ray diffraction file No. 422259 ($Li_7La_3Zr_2O_{12}$) of CSD (Cambridge Structural Database). As compared with No. 422259, the solid electrolyte 19 may have differences in the type of constituting elements, the Li concentration, and the like. Therefore, diffraction angle and intensity ratio may vary. A typical crystal structure of this type is a cubic system (space group: Ia-3d ("-" is an over-line representing rotary inversion), JCPDS:84-1753).

Referring back to FIG. 1, description will be continued. A typical example of the material of the solid electrolyte 19 is $Li_7La_3Zr_2O_{12}$. In the solid electrolyte 19, a part of the elements forming $Li_7La_3Zr_2O_{12}$ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthaoids (except for La).

Examples of the solid electrolyte 19 include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

Particularly preferably, the solid electrolyte 19 contains at least one of Mg and element A (A represents at least one element selected from the group consisting of Ca, Sr, and Ba), and satisfies all the following conditions (1) to (3) regarding mole proportions of the elements. Alternatively, the solid electrolyte 19 preferably contains both Mg and element A, and satisfies all the following conditions (4) to (6) regarding mole proportions of the elements. From the viewpoint of elevating ion conductivity of the solid electrolyte 19, element A is preferably Sr.

(1)

$$1.33 \leq Li/(La+A) \leq 3$$

(2)

$$0 \leq Mg/(La+A) \leq 0.5$$

(3)

$$0 \leq A/(La+A) \leq 0.67$$

(4)

$$2.0 \leq Li/(La+A) \leq 2.6$$

(5)

$$0.01 \leq Mg/(La+A) \leq 0.14$$

(6)

$$0.04 \leq A/(La+A) \leq 0.17$$

The median diameter of circle-equivalent diameters of particles of the solid electrolyte 19 appearing in a cross section of the separator 15 is preferably 0.5 to 10 $\mu$m, more preferably 0.5 to 6 $\mu$m. The median diameter is set to these ranges so as to render the surface area of each particle of the solid electrolyte 19 appropriately large, thereby securing the amount of Li ions moving between the particles of the solid electrolyte 19 and the electrolytic solution present on the surfaces of the particles of the solid electrolyte 19.

The median diameter of particles of the solid electrolyte 19 is obtained through the following procedure. An image of the solid electrolyte 19 appearing in a cross section of the separator 15 (a polished surface, a surface obtained as a result of irradiation of a focused ion beam (FIB), or a surface obtained as a result of ion milling) is captured by using a scanning electron microscope (SEM), and the captured image is analyzed. Specifically, the circle-equivalent diameters of particles of the solid electrolyte 19 are calculated from the areas of the particles, and a volume-based particle size distribution is obtained. The median diameter is the circle-equivalent diameter at which the cumulative value of the frequency in the particle size distribution is 50%. In order to ensure accuracy, the image used to obtain the particle size distribution should have an area of 400 $\mu$m$^2$ or more of the separator 15.

In addition to the solid electrolyte 19 having a garnet-type crystal structure containing Li, La, Zr, and O, the ion conductor 10 may further contain one or more additional solid electrolytes. Examples of the additional solid electrolyte include crystalline or amorphous oxide-type solid electrolytes such as a perovskite-type solid electrolyte, a NASICON-type solid electrolyte, and a LISICON-type solid electrolyte, and hydride-type solid electrolytes.

Examples of the perovskite-type solid electrolyte include an oxide containing at least Li, Ti, and La (e.g., $La_{2/3-x}Li_{3x}TiO_3$). Examples of the NASICON-type solid electrolyte include an oxide containing at least Li and M (M represents one or more elements selected from Ti, Zr, and Ge) and P (e.g., $Li(Al,Ti)_2(PO_4)_3$ or $Li(Al,Ge)_2(PO_4)_3$). Examples of the LISICON-type solid electrolyte include $Li_{14}Zn(GeO_4)_4$. Examples of the hydride-type solid electrolyte include alkali metal or alkaline earth metal hydrides each containing at least one element belonging to group 13 element (e.g., B, Al, Ga, In, and Ta) of the 18-group periodic table. Specific examples thereof include $LiBH_4$ and $LiAlH_4$.

The ion conductor 10 contains an ionic liquid in which a lithium salt is dissolved. The lithium salt is a compound which is employed for establishing transfer of cations between the positive electrode layer 12 and the negative electrode layer 16. Examples of the anion of the lithium salt include halide ions (e.g., I$^-$, Cl$^-$, and Br$^-$), SCN$^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and RCOO$^-$ (wherein R represents a C1 to C4 alkyl group, a phenyl group, or a naphthyl group).

The anion of the lithium salt is preferably a sulfonylimido moiety having a sulfonyl group -S(=O)$_2^-$; such as $N(SO_2F)_2^-$, $N(SO_2CF_3)_2^-$, or $N(SO_2C_2F_5)_2^-$ for an advantageous property of the sulfonylimide anion. Specifically, even when the salt concentration increases, a rise in viscosity of the electrolytic solution and a drop in ion conductivity are suppressed. Further, a film which has high stability and low resistivity (SEI) is formed, whereby reductive decomposition of the ionic liquid is suppressed, and the potential window on the reduction side can be expanded.

In some cases, $N(SO_2F)_2^-$ may be abbreviated as referred to as [FSI]$^-$ (i.e., bis(fluorosulfonyl)imide anion) and $N(SO_2CF_3)2^-$ may be abbreviated as [TFSI]$^-$ (i.e., bis(trifluoromethanesulfonyl)imide anion). A particularly preferred example of the lithium salt is lithium bis(fluorosulfonyl) imide (LiFSI), because LiFSI is small in influence of a rise in viscosity of the ionic liquid and is effective for formation of a good passive film (SEI).

The ionic liquid is a compound formed of a cation and an anion and assumes liquid at ambient temperature and normal pressure. The ionic liquid is preferred because of its relatively wide potential window and high fire retardancy. The ionic liquid preferably contains one or more cation species selected from the group consisting of ammonium, imidazolium, pyrrolidinium, and piperidinium.

No particular limitation is imposed on the anion moiety of the ionic liquid. Examples of the anion moiety include inorganic anions such as $BF_4^-$ and $N(SO_2F)_2^-$; and organic anions such as $B(C_6H_5)_4^-$, $CH_3SO_3^-$, $CF_3SO_3^-$, $N(SO_2CF_3)_2^-$, and $N(SO_2C_4F_9)_2^-$. The anion moiety of the ionic liquid is preferably a fluorine-based anion containing fluorine atoms, because it has high reactivity.

Examples of the ionic liquid include N,N-diethyl-N-methyl-N-(2-methoxyethyl)ammonium bis(fluorosulfonyl) imide (DEME-FSI), N,N-diethyl-N-methyl-N-(2-methoxyethyl)ammonium bis(trifluoromethanesulfonyl)imide (DEME-TFSI), 1-ethyl-3-methylimidazolium bis(fluorosulfonyl)imide (EMI-FSI), 1-ethyl-3-methylimidazolium bis(trifluoromethanesulfonyl)imide (EMI-TFSI), N-butyl-N-methylpiperidinium bis(fluorosulfonyl)imide, N-methyl-N-propylpiperidinium bis(trifluoromethanesulfonyl)imide, N-methyl-N-propylpyrrolidinium bis(fluorosulfonyl)imide (P13-FSI), and N-methyl-N-propylpyrrolidinium bis(trifluoromethanesulfonyl)imide (P13-TFSI). A mixture thereof may also be employed.

The ionic liquid may be a solvated ionic liquid. An example of the solvated ionic liquid is a solution obtained by dissolving a lithium salt in a sulfone-type solvent (e.g., sulfolane or a sulfolane derivative) or in a glyme-type solvent (e.g., tetraglyme).

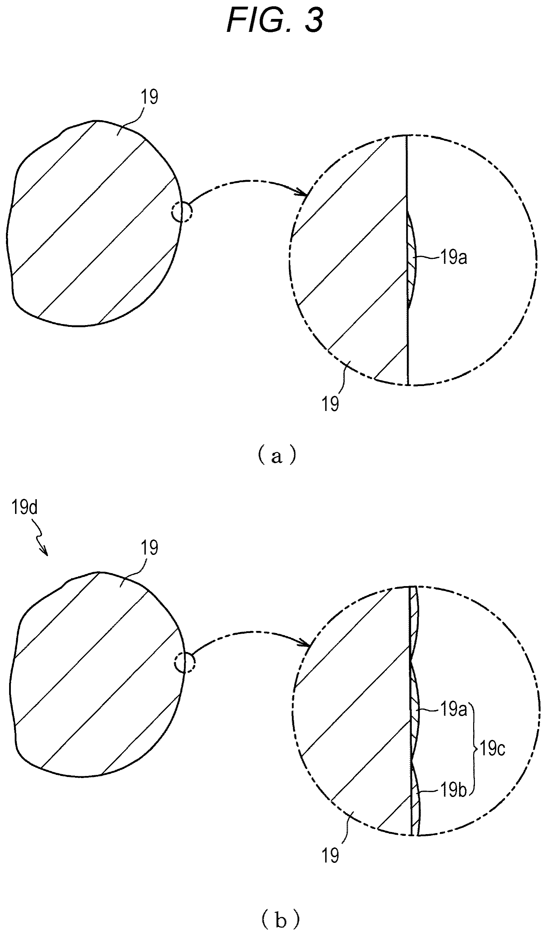

Section (a) of FIG. 3 is a cross-sectional view of the solid electrolyte 19. Lithium carbonate 19a is partially present on the surface of the solid electrolyte 19. Lithium carbonate 19a is a compound produced on the surface of the solid electrolyte 19 as a result of reaction between the solid electrolyte 19 and moisture and carbon dioxide in the atmosphere. It is possible to partially produce lithium carbonate 19a on the surface of the solid electrolyte 19 by controlling the amounts of moisture and carbon dioxide in the atmosphere surrounding the synthesized solid electrolyte 19, the period of time between synthesis of the solid electrolyte 19 and machining of the solid electrolyte 19, etc.

The fact that lithium carbonate 19a is partially present on the surface of the solid electrolyte 19 can be confirmed through analysis of the surface of the solid electrolyte 19 by x-ray photoelectron spectroscopy (XPS); i.e., by observing a spectrum corresponding to zirconium that constitutes the solid electrolyte 19 and a spectrum corresponding to carbonate ions that constitute lithium carbonate 19a. Since lithium carbonate 19a constituting a resistive phase is present only partially on the surface of the solid electrolyte 19, in the ion conductor 10 containing an aggregate of particles of the solid electrolyte 19, regions where lithium carbonate 19a constituting a resistive phase is not present can be provided between particles of the solid electrolyte 19. Accordingly, the lithium ion conducting property of the ion conductor 10 can be controlled.

The relative concentration ratio of zirconium to carbonate ions on the surface of the solid electrolyte 19 is preferably 0.01 or greater and less than 1.00. In the case where the relative concentration ratio of zirconium to carbonate ions is less than 0.01, the surface of the solid electrolyte 19 is widely covered with lithium carbonate, which is disadvantageous from the viewpoint of reducing the interfacial resistance of the solid electrolyte 19. The relative concentration ratio of zirconium to carbonate ions is obtained by calculating the integrated intensities of the peaks of spectra which correspond to zirconium and carbonate ions and are obtained by XPS, calculating their concentrations (atm%) by the relative sensitivity factor method using device-specific sensitivity coefficients, and calculating the relative concentration ratio from the ratio of the concentrations.

Section (b) of FIG. 3 is a cross-sectional view of the solid electrolyte 19 in contact with the ionic liquid containing a fluorine-based anion. Since lithium carbonate 19a hardly dissolves in the ionic liquid, lithium carbonate 19a remains on the surface of the solid electrolyte 19 in contact with the ionic liquid. Although lithium carbonate 19a does not react with the ionic liquid, the solid electrolyte 19 reacts with the ionic liquid. The fluorine-based anion, which has high reactivity, reacts with the solid electrolyte 19 and produces a compound 19b containing a fluoride (compound composed of fluorine and another element or atomic group) on a portion of the solid electrolyte 19, which portion is not covered with lithium carbonate 19a. As a result, a film 19c containing lithium carbonate 19a and the compound 19b is provided on the surface of the solid electrolyte 19. A composite 19d contains the solid electrolyte 19 with the film 19c provided thereon and including lithium carbonate 19a and the compound 19b.

The fact that the fluoride chemically bonded to the solid electrolyte 19 is contained in the compound 19b can be confirmed through analysis by XPS. The fact that the compound 19b is chemically bonded (chemically adsorbed) to the surface of the solid electrolyte 19 can be confirmed from the chemical shift of the peak position (the value of binding energy) of XPS, which changes with the state of chemical bonding). The spectrum of the fluoride chemically bonded to the solid electrolyte 19 appears at 685 eV (F1s). It is estimated from the detection depth of XPS that the thickness of the film 19c is about 5 nm.

By performing a heat treatment of the solid electrolyte 19 with the compound 19b produced thereon, the film 19c containing the compound 19b can be fixed to the surface of the solid electrolyte 19. The temperature range of the heat treatment is, for example, 60°C to 90°C, and the time of the heat treatment is, for example, 1 hour to 3 hours. In the ion conductor 10 containing the aggregate of particles of the solid electrolyte 19 with the film 19c formed thereon and containing the compound 19b, regions where the compound 19b is present are provided between particles of the solid electrolyte 19. Since the lithium ion conductivity of the compound 19b is higher than the lithium ion conductivity of lithium carbonate 19a, it is possible to enhance lithium ion conductivity, as compared with the case where lithium carbonate is present between the particles of the solid electrolyte 19. Accordingly, the lithium ion conducting property of the ion conductor 10 can be controlled.

The relative concentration ratio of the fluoride to carbonate ions in the film 19c is preferably 0.1 or greater and less than 1.0. In the case where the relative concentration ratio of the fluoride to carbonate ions is less than 0.01, the surface of the solid electrolyte 19 is widely covered with lithium carbonate, which is disadvantageous from the viewpoint of reducing the interfacial resistance of the solid electrolyte 19. The relative concentration ratio of the fluoride to carbonate ions is obtained by calculating the integrated intensities of the peaks of spectra which correspond to the fluoride and carbonate ions and are obtained by XPS, calculating their concentrations (atm%) by the relative sensitivity factor method using device-specific sensitivity coefficients, and calculating the relative concentration ratio from the ratio of the concentrations.

The salt concentration of the ionic liquid containing the lithium salt dissolved therein is preferably 4.0 mol/kg or less, because in the case where the salt concentration of the ionic liquid is greater than 4.0 mol/kg, the viscosity of the ionic liquid increases, and the lithium ion conductivity tends to decrease significantly.

In the ion conductor 10, the ratio of the volume of the solid electrolyte 19 to the sum of the volume of the solid electrolyte 19 and the volume of the ionic liquid is preferably 52% or greater and less than 100%, more preferably 61% or greater and less than 100%. By virtue of the combination of the solid electrolyte 19 with the ionic liquid, the interfacial resistance of the solid electrolyte 19 can be reduced, whereby a transport number of Li ions of the ion conductor 10 can be larger than the transport number of Li ions of the customary employed electrolytic solution. As a result, stability in operation of the power storage device 11 in which the ion conductor 10 is disposed is enhanced.

The ion conductor 10 may contain a binder for binding the solid electrolyte 19. Examples of the binder include a fluororesin, polyolefin, polyimide, polyvinylpyrrolidone, poly(vinyl alcohol), cellulose ether, and rubber polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

Examples of the vinylidene fluoride-based polymer include a vinylidene fluoride homoploymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. One or more copolymerizable monomers are polymerized with vinylidene fluoride to form a copolymer.

The salt concentration of the ionic liquid contained in the ion conductor 10 is determined, for example, by the following procedure. Although the ion conductor 10 which constitutes the separator 15 will be described here, the salt concentration of the ionic liquid contained in the ion conductor 10 which constitutes the active material layers 14 and 18 can be determined similarly.

First, pieces obtained by crushing the separator 15 are immersed in a solvent and thus the ionic liquid contained in the separator 15 is dissolved in the solvent. Subsequently, the resultant mixture is separated into a solid component and a liquid component by a centrifugal separator. The Li content of the separated liquid component is determined by radiofrequency inductively coupled plasma spectroscopy (ICP).

In addition, the type of the organic solvent contained in the separator 15 is identified by, for example, gas chromatograph-mass spectrometry (GC-MS). Analysis of the separator 15 and analysis of an organic solvent whose type has been identified (hereinafter referred to as a "reference material") are performed by thermogravimetric differential thermal analysis (TG-DTA), and the amount of the organic solvent contained in the separator 15 is determined by comparing the results of the analysis of the reference material and the results of the analysis of the separator 15. The molar concentration by mass (mol/kg) of the lithium salt in the ionic liquid is calculated on the basis of the amount of Li contained in the liquid component and the amount of the organic solvent contained in the separator 15.

The amounts (vol.%) of the solid electrolyte 19 and the ionic liquid are determined by the following procedure. The separator 15 is frozen or embedded in a tetrafunctional epoxy resin or the like, which is then solidified. Subsequently, 5,000x fields of view randomly selected from a cross section of the separator 15 are analyzed by an SEM equipped with an energy dispersive x-ray spectrometer (EDS) to thereby determine the amounts of the solid electrolyte 19 and the ionic liquid. In the analysis, for example, distributions of La, Zr, and S are determined or image analysis is performed based on the contrast of a backscattered electron image, whereby the area of the solid electrolyte 19 and the area of the ionic liquid are determined. The amounts (vol.%) of the solid electrolyte 19 and the ionic liquid are obtained by considering the ratio of the areas on the cross section of the separator 15 as the ratio of the volumes in the ion conductor 10 of the separator 15.

The Li ion conductivity of the ion conductor 10 is determined on the basis of the type, salt concentration, or the like of the solid electrolyte 19, the lithium salt, and the organic solvent. The lithium ion conductivity of the ion conductor 10 at 25°C is preferably $1.0 \times 10^{-5}$ S/cm or more, for ensuring the output density of the power storage device 11 containing the ion conductor 10.

Since the ion conductor 10 contains an anion originating from the ionic liquid and the lithium salt, the Li ion conductivity of the ion conductor 10 is determined through the following procedure. Specifically, current collectors are brought into close contact with opposite surfaces of a sheet of the ion conductor 10, to thereby form a symmetric cell. Through the AC impedance method, the entire ion conductivity of the cell is calculated. The Li ion conductivity is calculated by multiplying the overall ion conductivity by the transport number of Li ions. The transport number of Li ions is determined through the AC impedance method and the stationary state DC method.

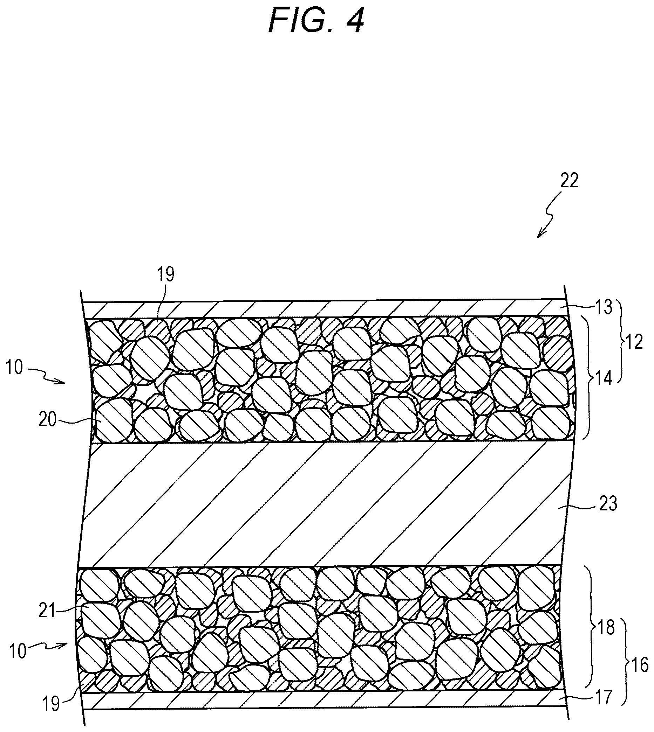

A second embodiment will next be described with reference to FIG. 4. In the first embodiment, there has been described the case where the ion conductor 10 is used in the power storage device 11 whose power generating elements are formed of solid materials. In the second embodiment, there will be described the case where the ion conductor 10 is used in a liquid-type lithium ion battery employing an electrolyte containing an organic solvent. Portions identical to the portions described in the first embodiment are denoted by the same reference numerals, and further descriptions thereof are omitted. FIG. 4 is a cross-sectional view of a power storage device 22 according to the second embodiment.

The power storage device 22 includes, from top to bottom, a positive electrode layer 12, a separator 23, and a negative electrode layer 16. These elements are built in a case (not illustrated). The separator 23 is formed of a porous body which is resistive to active materials 20, 21 contained in the positive electrode layer 12 and the negative electrode layer 16 and to an electrolytic solution and which allows passage of lithium ions but has no electron conductivity. Examples of the material of the separator 23 include a nonwoven fabric and a porous membrane formed of cellulose, polypropylene, polyethylene, polyimide, alumina, etc. The electrolytic solution containing the ionic liquid is the same as the electrolytic solution described in the first embodiment, and descriptions thereof are omitted.

In the power storage device 22 according to the second embodiment, since the ion conductor 10 is contained in the positive electrode layer 12 and the negative electrode layer 16, similar to the power storage device 11 according to the first embodiment, the stability of operation increases.

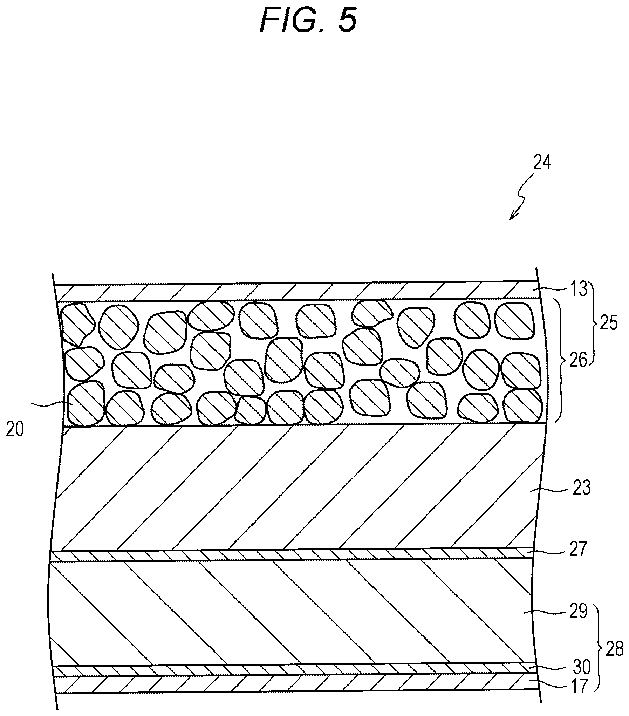

A third embodiment will next be described with reference to FIG. 5. In the first and second embodiments, there has been described the case where the ion conductor 10 is contained in the positive electrode layer 12, the separator 15, and the negative electrode layer 16. In the third embodiment, there will be described case where the ion conductor 10 is contained in protective layers 27, 30. Portions identical to the portions described in the first and second embodiments are denoted by the same reference numerals, and detailed descriptions thereof are omitted. FIG. 5 is a cross-sectional view of a power storage device 24 according to the third embodiment.

The power storage device 24 includes, from top to bottom, a positive electrode layer 25, a separator 23, and a negative electrode layer 28. These elements are built in a case (not illustrated). The power storage device 24 is a liquid-type lithium ion battery employing an electrolyte containing an organic solvent.

The positive electrode layer 25 includes an active material layer 26 and a current-collecting layer 13 disposed on active material layer 25. The active material layer 26 contains an active material 20. In order to lower the resistance of the active material layer 26, the active material layer 26 may further contain a conducting aid. Examples of the conducting aid include carbon black, acetylene black, Ketjen black, carbon fiber, Ni, Pt, and Ag.

Between the separator 23 and the negative electrode layer 28, a protective layer 27 is disposed. The protective layer 27 contains the ion conductor 10.

The negative electrode layer 28 includes an active material layer 29, the protective layer 30, and a current-collecting layer 17, which are stacked from top to bottom. The active material layer 29 is formed from, for example, Li, Li-Al alloy, Li-Sn alloy, Li-Si alloy, Li-Mg alloy, Li-Si alloy, or Si-Li alloy. The protective layer 30 contains the ion conductor 10. The protective layers 27, 30 are disposed through sheet lamination using a slurry containing the ion conductor 10 or application of the slurry containing the ion conductor 10 onto the separator 23 or the current-collecting layer 17, or a similar technique.

Since the solid electrolyte 19 contained in the ion conductor 10 and having a garnet-type crystal structure containing Li, La, Zr, and O is resistive to chemical reduction by metallic lithium present in the active material layer 29, stability in operation of the power storage device 24 is enhanced. In addition, the protective layer 27 present between the active material layer 29 and the separator 23 suppresses short-circuit which would otherwise be caused by dendritic growth of metallic lithium. The protective layer 30 present between the active material layer 29 and the current-collecting layer 17 prevents degradation of the current-collecting layer 17.

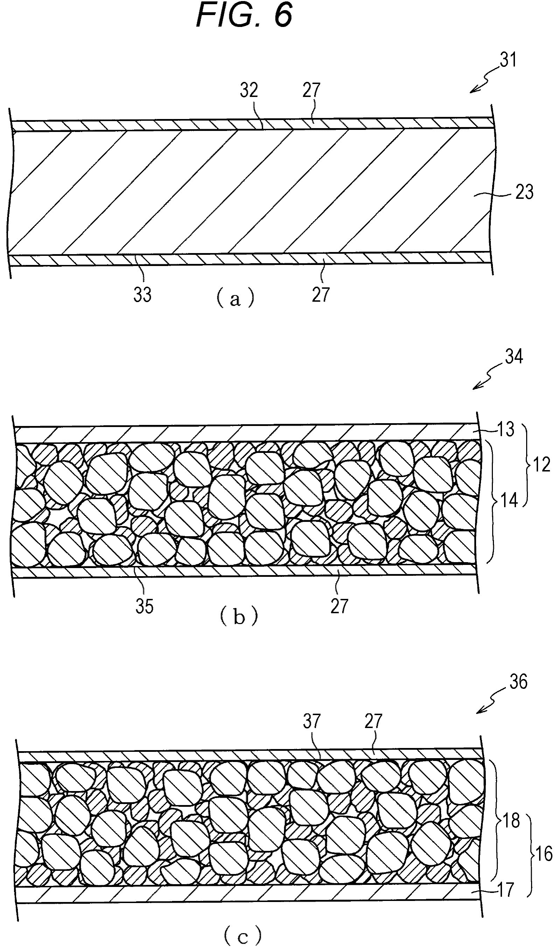

Fourth to sixth embodiments will next be described with reference to FIG. 6. Portions identical to the portions described in the first to third embodiments are denoted by the same reference numerals, and detailed descriptions thereof are omitted. Section (a) of FIG. 6 is a cross-sectional view of an insulator 31 according to the fourth embodiment.

The insulator 31 includes a separator 23 and protective layers 27 which is in contact with the separator 23. The separator 23 has a first interface 32 and a second interface 33 located opposite to the first interface 32, and the protective layers 27 are disposed on the first interface 32 and the second interface 33. The protective layers 27 disposed on the separator 23 can suppress short-circuit which would otherwise be caused by dendritic growth of metallic lithium contained in the power storage device. Even when a short circuit is formed in the power storage device and the separator 23 is likely to thermally deform, since the protective layers 27 are present, the shape of the separator 23 is maintained, whereby occurrence of thermal runaway of the power storage device is prevented.

Section (b) of FIG. 6 is a cross-sectional view of an electrode 34 according to the fifth embodiment. The electrode 34 includes a positive electrode layer 12 and a protective layer 27 which is in contact with an active material layer 14 of the positive electrode layer 12. In the electrode 34, the protective layer 27 is disposed on an interface 35 of the active material layer 14 located opposite its surface on which a current-collecting layer 13 is disposed. The protective layer 27 disposed on the interface 35 of the active material layer 14 can reduce dendritic growth from the negative electrode layer 16 of the power storage device.

Section (c) of FIG. 6 is a cross-sectional view of an electrode 36 according to the sixth embodiment. The electrode 36 includes a negative electrode layer 16 and a protective layers 27 which is in contact with an active material layer 18 of the negative electrode layer 16. In the electrode 36, the protective layer 27 is disposed on an interface 37 of the active material layer 18 located opposite its surface on which a current-collecting layer 17 is disposed. The protective layer 27 disposed on the interface 37 of the active material layer 18 can reduce dendritic growth from the negative electrode layer 16 of the power storage device.

The insulator 31 is disposed in the power storage device in place of the separator 23 of the power storage device 22 according to the second embodiment and the separator 23 of the power storage device 24 according to the third embodiment. In the insulator 31, one of the two protective layers 27 disposed on the interfaces 32, 33 of the separator 23 may be omitted.

The electrode 34 is disposed in the power storage device in place of the positive electrode layer 12 of the power storage device 22 according to the second embodiment and the positive electrode layer 25 of the power storage device 24 according to the third embodiment. The electrode 36 is disposed in the power storage device in place of the negative electrode layer 16 of the power storage device 22 according to the second embodiment and the negative electrode layer 28 of the power storage device 24 according to the third embodiment.

EXAMPLES

The present invention will next be described in more detail by way of Examples, which should not be construed as limiting the invention thereto.

(Example 1)

$Li_2CO_3$, MgO, $La(OH)_3$, $SrCO_3$, and $ZrO_2$ were weighed in specific amounts so as to form $Li_{6.95}Mg_{0.15}La_{2.75}Sr_{0.25}Zr_{2.0}O_{12}$. In consideration of volatilization of Li during firing, the amount of $Li_2CO_3$ was adjusted in about 15 mol% excess (as reduced to Li). The thus-weighed raw materials and an organic solvent were put into a nylon-made pot with zirconia balls, and the mixture was subjected to pulverization and mixing with a ball mill for 15 hours. The resultant slurry was removed from the pot and dried, and then calcined on an MgO plate at 900°C for one hour, and then at 1,200°C for 10 hours. The calcined product was fired on an MgO plate in an inert gas atmosphere at 1,100°C for 4 hours, whereby a fired body was obtained.

The fired body was wet-ground using a planetary ball mill in an environment not exposed to atmosphere, and then dried to obtain powder having particle sizes of submicrons to several microns. The powder was stored for one week in Ar whose dew-point was -80°C, whereby a solid electrolyte in Example 1 was obtained.

An ionic liquid was prepared by dissolving a lithium salt $LiN(SO_2F)_2$(LiFSI) in an ionic liquid N-methyl-N-propylpyrrolidinium bis(fluorosulfonyl) imide (P13-FSI) so that the salt concentration became 2.3 mol/kg. The resultant ionic liquid and the solid electrolyte were mixed in a glove box in an argon atmosphere by using a mortar such that the ratio between the solid electrolyte and the ionic liquid became 80 : 20 (volume ratio), whereby a composite powder of the solid electrolyte and the ionic liquid was obtained. The composite powder was heated at 60°C in an Ar atmosphere for one hour, whereby an ion conductor of Example 1 was obtained.

(Example 2)

A solid electrolyte of Example 2 and an ion conductor of Example 2 were obtained by the same procedure as in Example 1, except that the powder was stored for one week in dry air whose dew-point was -40°C.

(Comparative Example)

A solid electrolyte of Comparative Example and an ion conductor of Comparative Example were obtained by the same procedure as in Example 1, except that the powder was stored for one week in the atmosphere whose temperature was 25°C and whose humidity was 30%.

(Measurement of ion conductivity)

Each of the ion conductors of Example 1, Example 2, and Comparative Example was put, in an Ar atmosphere, into a tube formed of an insulating material and having a bore whose diameter was 10 mm, and a pressure of 360 MPa was applied to the ion conductor, by use of circular columnar electrodes formed of stainless steel and inserted into the tube from its opposite ends, so as to form the ion conductor into a disc-like shape. The ion conductivity of the ion conductor was measured by the AC impedance method in a state in which the pressure was applied to the ion conductor. The ion conductivity was measured under the conditions that the temperature was 25°C, the voltage was 10 mV, and the frequency was 7 MHz to 100 mHz.

(Measurement of lithium ion conductivity)

The molded body whose ion conductivity had been measured was removed from the tube, and Li foil having a diameter of 9 mm was attached to opposite sides of the molded body. Subsequently, the molded body with the Li foil attached thereto and Cu foil having a diameter of 10 mm were disposed in the tube so that the Cu foil was in contact with the Li foil on the opposite sides of the molded body. The axial force of a screw tightened with a tightening torque of 8 N was applied to the Cu foil, whereby a symmetric cell in which the Li foil was in close contact with the molded body was obtained.

First, a constant voltage V was applied to the symmetric cell, and a current value I after establishment of a steady state was measured. The resistance value $R_P$ of the symmetric cell in the steady state was calculated from the formula $R_P = V/I$. The current value in the steady state was measured under the condition that the voltage was 3 mV, the total time was 4 hours, and the measurement interval was 60 seconds.

The resistance value $R_S$ and the interfacial resistance $R_{INT}$ of the symmetric cell in the steady state were analyzed by the AC impedance method. The AC impedance measurement was performed under the conditions that the temperature was 25°C, the voltage was 10 mV, and the frequency was 7 MHz to 100 mHz.

The transport number $t_{Li}$ of lithium ions was calculated by substituting the resistance value $R_S$, the resistance value $R_P$, and the interfacial resistance $R_{INT}$ into the formula for obtaining the transport number $t_{Li}$ of lithium ions; i.e., $t_{Li} = R_S/(R_P-R_{INT})$. The lithium ion conductivity was calculated by multiplying the ion conductivity by the transport number $t_{Li}$. The ion conductivities, the transport numbers, and the lithium ion conductivities of Example 1, Example 2, and Comparative Example are listed in Table 1.

[Table 1]

|  | Ion conductivity (S/cm) | Li ion transport number | Lithium ion conductivity (S/cm) | Relative concentration ratio | |
|---|---|---|---|---|---|
|  |  |  |  | $Zr/CO_3$ | $F/CO_3$ |
| Example 1 | $1.3\times10^{-4}$ | 0.21 | $2.7\times10^{-5}$ | 0.85 | 0.31 |
| Example 2 | $1.3\times10^{-4}$ | 0.18 | $2.4\times10^{-5}$ | 0.03 | 0.19 |
| Comp. Ex. | $6.0\times10^{-5}$ | 0.14 | $8.1\times10^{-6}$ | 0.00 | 0.04 |

As shown in Table 1, the transport number decreased in the order of Example 1, Example 2, and Comparative Example, and the lithium ion conductivity also decreased in the order of Example 1, Example 2, and Comparative Example. The lithium ion conductivity of Comparative Example was less than 1/2 of the lithium ion conductivities of Example 1 and Example 2. In order to investigate the cause of producing the differences in lithium ion conductivity and transport number, analysis of the interface between the solid electrolyte and the ionic liquid and analysis of the interface between lithium carbonate and the ionic liquid were performed.

(Preliminary experiment)

Reaction products at the interface between the solid electrolyte and the ionic liquid and reaction products at the interface between lithium carbonate and the ionic liquid were investigated by using XPS. The solid electrolyte employed was a sintered body, and the lithium carbonate employed was a powder compact.

The sintered body of the solid electrolyte was fabricated through the following procedure. The calcined body before obtaining the solid electrolyte of Example 1 and an organic solvent were put into a nylon-made pot, and were mixed and pulverized with a ball mill for 15 hours. The slurry removed from the pot was dried and was put into a mold having a diameter of 12 mm, and a molded body having a thickness of about 1.5 mm was obtained by means of press molding. A hydrostatic pressure of 1.5 t/cm$^2$ was further applied to the molded body by using a cold isostatic press (CIP). The molded body was covered with a calcined body having the same composition as the molded body and fired in an inert gas atmosphere at 1,100°C for 4 hours, whereby a sintered body was obtained.

After a flat surface of the sintered body was polished in an Ar atmosphere, an ionic liquid obtained by dissolving LiFSI into P13-FSI and having a salt concentration of 2.1 mol/kg was immediately applied dropwise to the polished surface. After leaving the sintered body to stand, the ionic liquid on the polished surface was wiped off with a paper wiper. The sintered body was encapsulated in a transfer vessel in an Ar atmosphere, and then the polished surface was analyzed by XPS.

The powder compact of lithium carbonate was obtained by putting powder of lithium carbonate (special grade) into a tube formed of an insulating material and having a bore whose diameter was 10 mm, and applying a pressure of 360 MPa to the powder using circular columnar rods formed of stainless steel and inserted into the tube from its opposite ends. The ionic liquid obtained by dissolving LiFSI into P13-FSI and having a salt concentration of 2.1 mol/kg was applied dropwise to a flat surface of the compact. After leaving the compact to stand, the ionic liquid on the surface of the compact was wiped off with a paper wiper, and the surface of the compact was analyzed by XPS.

For comparison, the ionic liquid obtained by dissolving LiFSI into P13-FSI and having a salt concentration of 2.1 mol/kg was applied dropwise to the surface of a sintered body of alumina having a high purity (Al$_2$O$_3$: 99.5%, water absorption coefficient: 0.01% or less). After leaving the sintered body to stand, the ionic liquid on the surface of the sintered body was wiped off with a paper wiper, and the surface of the sintered body was analyzed by XPS.

For all the analyses of the three types of samples, XPS was performed under the conditions that x-rays were monochromatic AlK$\alpha$ rays, the path energy was 140 eV, and the analysis region was 100 $\mu$m$\phi$. Results of the analyses show that a spectrum of 688 eV (F1s) attributed to the S-F bond of the ionic liquid, spectra attributed to the C-N bond and the S-N bond (N1s), a spectrum attributed to the S=O bond (S2p) were observed from the three types of samples, but spectra attributed to lithium compounds such as LixN and LixSOy were not observed. Although a spectrum of 685 eV (F1s) attributed to the fluoride chemically bonded to the solid electrolyte was observed on the polished surface of the solid electrolyte, that spectrum was not observed in the case of other two samples.

[Table 2]

|  | Atomic concentration (atm%) | |
| --- | --- | --- |
|  | S-F | Fluoride |
| Solid electrolyte | 7.1 | 3.4 |
| Lithium carbonate | 9.8 | 0.8 |
| Alumina | 9.7 | 0.8 |

Integrated intensities were respectively calculated from the spectrum of 688 eV (F1s) attributed to the residue of the ionic liquid and the spectrum of 685 eV (F1s) attributed to the fluoride chemically bonded to the solid electrolyte, and the atomic concentrations (atom%) of the ionic liquid and the fluoride were determined by the relative sensitivity factor method using device-specific sensitivity coefficients. Table 2 shows the determined atomic concentrations (atom%) of the ionic liquid and the fluoride.

As shown in Table 2, it was confirmed that the atomic concentration (S-F) originating from the residue of the ionic liquid on the surface of each sample is similar in all the three samples. It was also confirmed that the atomic concentration of the fluoride detected in lithium carbonate is similar to the atomic concentration of the fluoride detected in alumina. Namely, since the difference between the atomic concentration of the fluoride detected in lithium carbonate and the atomic concentration of the fluoride detected in alumina is in the range of error, it was confirmed that, whereas the solid electrolyte reacts with the fluorine-based anion of the ionic liquid, thereby producing a compound on the surface of the solid electrolyte, lithium carbonate does not react with the ionic liquid.

(Analysis of solid electrolyte)

Subsequently, the surfaces of powder particles of the solid electrolyte of Example 1, Example 2, and Comparative Example were analyzed. Each powder of the solid electrolyte was encapsulated in a transfer vessel in an Ar atmosphere, and then the surface of the solid electrolyte was analyzed by XPS. XPS was performed under the conditions that x-rays were monochromatic AlK$\alpha$ rays, the path energy was 140 eV, and the analysis region was 100 $\mu$m$\phi$.

The integrated intensity of a peak attributed to zirconium contained in the solid electrolyte and the integrated intensity of a peak of 289 eV (C1s) attributed to lithium carbonate (carbonate ions) produced on the surface of the solid electrolyte were calculated, and the atomic concentrations (atom%) of zirconium and carbonate ions were determined by the relative sensitivity factor method using device-specific sensitivity coefficients. Then, the relative concentration ratio $Zr/CO_3$ of the atomic concentration of zirconium to the atomic concentration of carbonate ions was calculated. The calculated relative concentration ratios are shown in Table 1.

(Analysis of ion conductor)

Each of the ion conductors of Example 1, Example 2, and Comparative example was put, in an Ar atmosphere, into a tube formed of an insulating material and having a bore whose diameter was 10 mm, and a pressure of 360 MPa was applied to the ion conductor by use of circular columnar rods formed of stainless steel and inserted into the tube from its opposite ends, whereby a disc-shaped molded body was formed. The molded body was removed from the tube and was broken so as to prepare a sample having a fracture surface. The sample was encapsulated into a transfer vessel in an Ar atmosphere, and the fracture surface of the sample was analyzed by XPS. XPS was performed under the conditions that x-rays were monochromatic AlK$\alpha$ rays, the path energy was 140 eV, and the analysis region was 100 $\mu$mo$\phi$.

The integrated intensity of a peak of 685 eV (F1s) attributed to the fluoride chemically bonded to the surface of the solid electrolyte and the integrated intensity of a peak of 289 eV (C1s) attributed to lithium carbonate (carbonate ions) produced on the surface of the solid electrolyte were calculated, and the atomic concentrations (atom%) of the fluoride and carbonate ions were determined by the relative sensitivity factor method using device-specific sensitivity coefficients. Then, the relative concentration ratio $F/CO_3$ of the atomic concentration of the fluoride to the atomic concentration of carbonate ions was calculated. The calculated relative concentration ratios are shown in Table 1.

(Results)

In Comparative Example, the relative concentration ratio $Zr/CO_3$ of the atomic concentration on the surfaces of the powder particles of the solid electrolyte was zero. Zirconium was not observed in Comparative Example, which shows that, of the surfaces of the powder particles of the solid electrolyte of Comparative Example, at least entire regions analyzed by XPS (hereinafter referred to as the "XPS analyzed regions") are covered with lithium carbonate. In contrast, the relative concentration ratio $Zr/CO_3$ was 0.85 in Example 1 and was 0.03 in Example 2. This shows that in Example 1 and Example 2, lithium carbonate is partially present in the XPS analyzed regions of the surfaces of the powder particles of the solid electrolyte.

In Comparative Example, the relative concentration ratio $F/CO_3$ of the atomic concentration on the surfaces of the powder particles of the solid electrolyte in the ion conductor was 0.04. As described above, it was confirmed by the preliminary experiment that the surface of the solid electrolyte of Comparative Example is lithium carbonate, and lithium carbonate does not react with the ionic liquid. Therefore, conceivably, the fluoride was detected in Comparative Example due to the influence of surface contamination during handling of the sample.

In contrast, the relative concentration ratio $F/CO_3$ was 0.31 in Example 1 and was 0.19 in Example 2. This shows that, in the case of the ion conductors of Example 1 and Example 2, lithium carbonate and fluoride are present in the XPS analyzed regions of the surfaces of the powder particles of the solid electrolyte. The transport numbers of the ion conductors of Example 1 and Example 2 are greater than that in Comparative Example, and the lithium ion conductivities of the ion conductors of Example 1 and Example 2 are two time or greater than the lithium ion conductivity of the ion conductor of Comparative Example. Presumably, this is due to the influence of the film formed on the surfaces of the powder particles of the solid electrolyte and containing the fluoride. The examples reveal that lithium ion conducting property can be controlled by partial presence of lithium carbonate on the surfaces of the powder particles of the solid electrolyte.

The present invention has been described on the basis of the embodiments. However, the present invention is not limited to the above embodiments. It can be easily inferred that various improvements and modifications are possible so long as they fall within the scope of the present invention.

In the above-described embodiments, there has been described the power storage device 11 which has the positive electrode layer 12 in which the active material layer 14 is provided on one surface of the current-collecting layer 13, and the negative electrode layer 16 in which the active material layer 18 is provided on one surface of the current-collecting layer 17. However, the present invention is not necessarily limited thereto. It should be apparent for those skilled in the art that the elements of the above embodiments can be applied to, for example, a power storage device which includes an electrode layer (so-called bipolar electrode) having the current-collecting layer 13, and the active material layer 14 and the active material layer 18 provided on the opposite surfaces of the current-collecting layer 13. By alternatingly stacking the bipolar electrode and the separator 15 and putting the stacked body into a case (not illustrated), a power storage device having a so-called bipolar structure can be obtained.

In the above-described embodiments, there has been described the case where each of the active material layers 14, 18 and the separator 15 contains the ion conductor 10. However, the present invention is not necessarily limited thereto. The power storage device may be configured such that at least one of the active material layers 14, 18 and the separator 15 contains the ion conductor 10.

In the above-described embodiments, the ion conductor 10 has been described while showing, as examples, the power storage devices 11, 22, 24 composed of lithium ion batteries. However, the present invention is not necessarily limited thereto. Examples of other power storage devices containing the ion conductor 10 include a lithium ion capacitor, a lithium-sulfur battery, a lithium-oxygen battery, and a lithium-air battery.

REFERENCE SIGNS LIST

    10 ion conductor
    11, 22, 24 power storage device
    12, 25 positive electrode layer (sheet, electrode)
    15 separator (sheet)
    16, 28 negative electrode layer (sheet, electrode)
    19 solid electrolyte
    19a lithium carbonate
    19c film
    19d composite
    23 separator
    27, 30 protective layer
    34, 36 electrode

**Claims**

1.  An ion conductor containing a solid electrolyte which has a garnet-type crystal structure containing Li, La, Zr, and O, wherein lithium carbonate is partially present on a surface of the solid electrolyte.

2.  The ion conductor according to claim 1, wherein, on the surface of the solid electrolyte, the relative concentration ratio of zirconium to carbonate ions is 0.01 or greater.

3.  A composite containing the ion conductor as recited in claim 1 or 2, and an ionic liquid containing a lithium salt dissolved therein, wherein

    the ionic liquid contains a fluorine-based anion,
    the surface of the solid electrolyte is covered with a film, and
    the relative concentration ratio of a fluoride to carbonate ions in the film is 0.1 or greater.

4.  The composite according to claim 3, wherein the solid electrolyte further contains Mg and Sr and does not contain F.

5.  A sheet containing the ion conductor as recited in claim 1 or 2.

6.  An electrode containing the ion conductor as recited in claim 1 or 2.

7.  A separator containing the ion conductor as recited in claim 1 or 2.

8.  An electrode having a protective layer which is in contact with the electrode and contains the ion conductor as recited in claim 1 or 2.

9. A separator having a protective layer which is in contact with the separator and contains the ion conductor as recited in claim 1 or 2.

10. A power storage device comprising the electrode as recited in claim 6.

11. A power storage device comprising the separator as recited in claim 7.

12. A power storage device comprising the electrode as recited in claim 8.

13. A power storage device comprising the separator as recited in claim 9.

## FIG. 1

# FIG. 2

# FIG. 3

( a )

( b )

FIG. 4

# FIG. 5

# FIG. 6

(a)

(b)

(c)

## INTERNATIONAL SEARCH REPORT

| International application No. |
|---|
| **PCT/JP2023/042638** |

### A. CLASSIFICATION OF SUBJECT MATTER

*H01B 1/08*(2006.01)i; *C01G 25/00*(2006.01)i; *H01B 1/06*(2006.01)i; *H01G 11/56*(2013.01)i; *H01M 4/13*(2010.01)i; *H01M 4/62*(2006.01)i; *H01M 4/66*(2006.01)i; *H01M 10/052*(2010.01)i; *H01M 10/0562*(2010.01)i; *H01M 10/0568*(2010.01)i
FI:   H01B1/08; H01M10/0568; H01M10/052; H01M4/62 Z; H01M4/66 A; H01M4/13; H01M10/0562; H01B1/06 A; C01G25/00; H01G11/56

According to International Patent Classification (IPC) or to both national classification and IPC

### B. FIELDS SEARCHED

Minimum documentation searched (classification system followed by classification symbols)

H01B1/08; C01G25/00; H01B1/06; H01G11/56; H01M4/13; H01M4/62; H01M4/66; H01M10/052; H01M10/0562; H01M10/0568

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-33081 A (SAMSUNG ELECTRONICS CO., LTD.) 28 February 2019 (2019-02-28) paragraphs [0105], [0106] | 1-2, 5-13 |
| A | | 3-4 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 January 2024** | **06 February 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

INTERNATIONAL SEARCH REPORT
Information on patent family members

International application No.

**PCT/JP2023/042638**

| Patent document cited in search report | Publication date (day/month/year) | Patent family member(s) | Publication date (day/month/year) |
|---|---|---|---|
| JP 2019-33081 A | 28 February 2019 | US 2019/0044186 A1<br>paragraphs [0143], [0144]<br>EP 3439072 A1<br>KR 10-2019-0015134 A<br>CN 109390627 A | |

Form PCT/ISA/210 (patent family annex) (July 2022)

**REFERENCES CITED IN THE DESCRIPTION**

**Patent documents cited in the description**

- JP 6735425 B